(19) Europäisches Patentamt / European Patent Office / Office européen des brevets

(11) **EP 2 696 344 B1**

(12) **FASCICULE DE BREVET EUROPEEN**

(45) Date de publication et mention de la délivrance du brevet:
**02.01.2019 Bulletin 2019/01**

(51) Int Cl.:
*G10L 25/27* (2013.01)  *G06K 9/62* (2006.01)

(21) Numéro de dépôt: **13179749.0**

(22) Date de dépôt: **08.08.2013**

(54) **Procede et systeme pour detecter des evenements sonores dans un environnement donne**

Verfahren und System zum Erfassen von Schallereignissen in einer gegebenen Umgebung

Method and system for detecting acoustic events in a given environment

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2012 FR 1202223**

(43) Date de publication de la demande:
**12.02.2014 Bulletin 2014/07**

(73) Titulaire: **Thales**
**92400 Courbevoie (FR)**

(72) Inventeurs:
- **Lecomte, Sébastien**
  **92662 GENNEVILLIERS Cedex (FR)**
- **Capman, François**
  **92662 GENNEVILLIERS Cedex (FR)**
- **Ravera, Bertrand**
  **92662 GENNEVILLIERS Cedex (FR)**
- **Lengelle, Régis**
  **10010 TROYES (FR)**
- **Richard, Cédric**
  **06304 NICE (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A2-2010/122056**

- **XINJUN PENG ET AL: "Efficient support vector data descriptions for novelty detection", NEURAL COMPUTING AND APPLICATIONS, SPRINGER-VERLAG, LO, vol. 21, no. 8, 18 mai 2011 (2011-05-18), pages 2023-2032, XP035125227, ISSN: 1433-3058, DOI: 10.1007/S00521-011-0625-3**
- **SEBASTIEN LECOMTE ET AL: "Abnormal events detection using unsupervised One-Class SVM - Application to audio surveillance and evaluation -", ADVANCED VIDEO AND SIGNAL-BASED SURVEILLANCE (AVSS), 2011 8TH IEEE INTERNATIONAL CONFERENCE ON, IEEE, 30 août 2011 (2011-08-30), pages 124-129, XP032053735, DOI: 10.1109/AVSS.2011.6027306 ISBN: 978-1-4577-0844-2**
- **CAMASTRA F ET AL: "A Novel Kernel Method for Clustering", TRANSACTIONS ON PATTERN ANALYSIS AND MACHINE INTELLIGENCE, IEEE, PISCATAWAY, USA, vol. 27, no. 5, 1 mai 2005 (2005-05-01), pages 801-804, XP011128403, ISSN: 0162-8828, DOI: 10.1109/TPAMI.2005.88**
- **SADJADI S O ET AL: "Unsupervised speech/music classification using one-class support vector machines", 2007 6TH INTERNATIONAL CONFERENCE ON INFORMATION, COMMUNICATIONS & SIGNAL PROCESSING; SINGAPORE; 10 - 13 DECEMBER 2007, IEEE, PISCATAWAY, NJ, USA, 10 décembre 2007 (2007-12-10), pages 1-5, XP031229647, ISBN: 978-1-4244-0982-2**

- MIREILLE TOHME, REGIS LENGELLEE: "Maximum Margin One Class Support Vector Machines for multiclass problems", PATTERN RECOGNITION LETTERS, vol. 32, no. 13, 30 août 2011 (2011-08-30) , - 2 septembre 2011 (2011-09-02), pages 1652-1658, XP028273570, ISSN: 0167-8655, DOI: 10.1016/J.PATREC.2011.06.021 [extrait le 2011-07-01]

- TONG XIE ET AL: "A novel distributed clustering algorithm based on OCSVM", INTELLIGENT COMPUTING AND INTELLIGENT SYSTEMS (ICIS), 2010 IEEE INTERNATIONAL CONFERENCE ON, IEEE, PISCATAWAY, NJ, USA, 29 octobre 2010 (2010-10-29), pages 661-665, XP031818727, DOI: 10.1109/ICICISYS.2010.5658673 ISBN: 978-1-4244-6582-8

## Description

L'invention concerne un système et un procédé permettant de détecter des évènements sonores. Elle permet notamment d'analyser des signaux audio et de détecter des signaux considérés comme anormaux par rapport à un environnement sonore habituel, appelé ambiance.

L'invention s'applique, notamment, dans les domaines de la surveillance et de l'analyse d'environnements, pour des applications de surveillance de zones, d'endroits ou d'espaces.

Dans le domaine de la surveillance et de l'analyse d'environnements, les systèmes conventionnels et connus de l'art antérieur s'appuient principalement sur des technologies image et vidéo. Dans des applications de reconnaissance de phénomènes sonores dans un flux audio, les problèmes à résoudre sont notamment les suivants :

1) comment détecter des évènements sonores spécifiques et/ou anormaux,
2) comment obtenir des solutions robustes au bruit de fond (ou ambiance) et à ses variabilités, c'est-à-dire des solutions qui sont fiables et qui ne génèrent pas de signaux d'alarmes continuellement et de façon intempestive,
3) comment classifier les différents évènements anormaux.

Dans le domaine de la surveillance et de l'analyse d'événements sonores, l'art antérieur distingue deux processus. Le premier processus est un processus de détection, le second est un processus de classification des évènements détectés.

Dans l'art antérieur, les méthodes de détection d'événements sonores s'appuient, en général, sur l'extraction de paramètres caractéristiques des signaux que l'on cherche à détecter tandis que les méthodes de classification sont, en général, basées sur des approches dites « supervisées » où un modèle par évènement est obtenu à partir des données d'apprentissage segmentées et étiquetées. Ces solutions reposent, par exemple, sur des algorithmes de classification connus de l'Homme du métier, sous les abréviations anglo-saxonnes HMM pour Hidden Markov Model, GMM pour Gaussian Mixture Model, SVM pour Support Vector Machine ou NN pour Neural Network. La proximité des données de test réelles et des données d'apprentissage conditionne les performances de ces systèmes de classification.

Ces modèles, malgré leurs performances, présentent toutefois des inconvénients. Ils nécessitent en effet de spécifier au préalable les évènements anormaux et de collecter une quantité de données suffisante et statistiquement représentative de ces événements. La spécification des évènements n'est pas toujours possible et la collecte d'un nombre suffisant de réalisations pour enrichir une base de données non plus. Il est de plus nécessaire, pour chaque configuration, de procéder à un nouvel apprentissage supervisé. La tâche de supervision requiert une intervention humaine, par exemple, une segmentation manuelle ou semi-automatique, une labellisation, etc. La flexibilité de ces solutions est donc limitée en termes d'usage, et la prise en compte de nouveaux environnements est difficile à mettre en oeuvre, les modèles obtenus étant corrélés à l'ambiance impactant les signaux d'apprentissage.

La publication intitulée « Abnormal Events Détection Using Unsupervised One-Class SVM-Application to Audio Surveillance and Evaluation » de Lecomte et al, IEEE In Advanced Video and Signal based Surveillance, 2011, AVSS 2011, divulgue une méthode s'appuyant sur une modélisation SVM1-classe. Cette méthode offre un modèle unique et global pour l'ensemble de l'ambiance (classe « normale »). Le modèle est difficile à exploiter pour l'amélioration des performances de classification. Il n'y a pas de notion de groupe ou de clustering et le procédé décrit ne permet pas de mettre à jour les modèles.

La demande de brevet EP 2422301 s'appuie sur une modélisation de la classe normale par un ensemble de GMM.

Le document intitulé « efficient support vector data descriptions for novelty détection » de Xinjun Peng et al, Neural Computing And applications, Springer-Verlag, vol. 21, n° 8, 18 mai 2011, pages 2023-2032, ne divulgue pas d'optimisation itérative et ne permet pas de mettre à jour un modèle.

### Définitions

La description de l'invention fait appel à des définitions qui sont explicitées ci-dessous.

Les signaux traités sont des signaux audio issus de capteurs acoustiques. Ces signaux sont représentés par un ensemble de grandeurs physiques (temporelles, fréquentielles ou mixtes), mathématiques, statistiques ou autres, appelées descripteurs.

L'extraction des descripteurs est réalisée sur des portions successives, avec ou sans recouvrement du flux audio. Pour chacune de ces portions, appelée trame, un vecteur de descripteurs est extrait.

L'espace dans lequel chaque trame d'un flux audio est représentée par son vecteur de descripteurs est appelé espace d'observation. Un tel vecteur peut être vu comme un « point » de l'espace d'observation dont les dimensions correspondent aux descripteurs.

Un ensemble de trames consécutives est appelé segment de signal, un segment peut être représenté par l'ensemble des vecteurs extraits des trames constituantes de ce segment. Les informations de segmentation sont extraites par analyse du signal audio ou des vecteurs de descripteurs et dénotent d'une similarité entre les trames successives qui constituent ledit segment.

On définit maintenant le terme « donnée audio ». Selon le contexte, il peut désigner le vecteur de descripteurs extrait d'une trame de signal, ou l'ensemble des vecteurs de descripteurs extraits sur les trames constituants un segment de signal, ou encore le vecteur unique représentant un segment du signal (par exemple un vecteur des valeurs moyennes ou médianes des descripteurs extraits des trames constituant ce segment). On appelle par ailleurs « représentation » d'un signal l'ensemble des données audio correspondantes à ce signal.

L'ensemble du processus consistant en l'extraction des données audio (vecteurs et, le cas échéant, informations de segmentation) depuis un signal audio est appelé dans la suite de la description « extraction de la représentation du signal ».

L'invention relève du domaine technique de l'apprentissage et plus particulièrement du champ de la reconnaissance des formes. On précise maintenant la terminologie qui sera, dans ce contexte, utilisée dans la suite de la description de l'invention.

Un groupe est un ensemble de données réunies parce qu'elles partagent des caractéristiques communes (valeurs de paramètres similaires). Dans le procédé selon l'invention, chaque sous-classe des signaux d'ambiance correspond à un groupe de données audio.

Un classifieur est un algorithme, permettant de conceptualiser les caractéristiques d'un groupe de données ; il permet de déterminer les paramètres optimaux d'une fonction de décision au cours d'une étape d'entrainement. La fonction de décision obtenue permet de déterminer si une donnée est incluse ou non dans le concept défini à partir du groupe de données d'entrainement. Par abus de langage, le terme classifieur désigne aussi bien l'algorithme d'entrainement que la fonction de décision elle-même.

La tâche soumise à un classifieur oriente le choix de ce dernier. Dans le procédé selon la présente invention, il est précisé que le modèle doit être construit à partir de la seule représentation des signaux d'apprentissage, correspondant à l'ambiance. La tâche associée à l'apprentissage de concepts lorsque seules les observations d'une unique classe sont disponibles est appelée classification 1-classe. On construit alors un modèle de cet ensemble d'observations pour ensuite détecter quelles nouvelles observations ressemblent ou non à la majeur partie de cet ensemble. Il est donc possible, selon la terminologie de l'art, de détecter des données aberrantes (terme anglo-saxon *outlier detection*) ou encore de découvrir la nouveauté (*novelty discovery*).

La modélisation concurrentielle selon l'invention est notamment basée sur l'entrainement d'un ensemble de classifieurs SVM 1-classe (chaque classifieur apprend une sous-classe de l'ambiance). Notons que les machines à vecteur de support ou SVM (du terme anglo-saxon *Support Vector Machines*) sont une famille de classifieurs, connus de l'homme du métier.

Le procédé selon l'invention est une méthode non-supervisée qui permet notamment de réaliser une modélisation concurrentielle, basée sur un ensemble de classifieurs SVM 1-classe, des données (dites données d'apprentissage) extraites des signaux audio dans un environnement à surveiller. Le modèle, résultant de la décomposition de l'ambiance en sous-classes, permet au cours de la découverte de nouvelles données (dites données de test) extraites de signaux de test de déterminer si le signal audio analysé relève de la classe « normale » (ambiance) ou la classe anormale (événement sonore anormal).

Dans l'application visée par la présente invention, on réalise un modèle de l'environnement sonore sous surveillance à partir de signaux enregistrés in situ, appelés signaux d'apprentissage. L'un des objectifs est d'être capable de classer de nouveaux signaux, appelés signaux de test, dans l'une des « classe », ou catégorie, suivante (des exemples de sons sont donnés, à titre illustratif et non limitatif, pour le contexte de la surveillance d'un quai de station de métro) :

- « signal normal » : le signal correspond à l'ambiance sonore de l'environnement (par exemple : arrivée/départ de train, ventilations, discussions entre passagers, avertissement sonore de la fermeture des portes, annonces de service,...),
- « signal anormal » : le signal correspond à un événement sonore non habituel pour l'ambiance (par exemple : coups de feu, bagarre, cris, vandalisme, bris de vitres, animaux, chahut d'enfants,...).

Il est fait l'hypothèse que peu, voire aucun, signal anormal n'est présent dans les signaux d'apprentissage, autrement dit, que les événements anormaux sont rares.

Le procédé selon l'invention construit un modèle de l'ambiance en étant robuste à la présence d'une faible quantité d'événements anormaux dans les signaux d'apprentissage. Cette construction, appelée « modélisation concurrentielle » réalise un modèle fin des signaux d'apprentissage par décomposition de la classe normal en « sous-classes », avec rejet des signaux rares (supposés anormaux). Cette décomposition est réalisée de manière non supervisée, c'est-à-dire qu'il n'est pas nécessaire d'étiqueter les signaux d'apprentissage, ni d'identifier les possibles événements anormaux présents dans ces signaux d'apprentissage.

Une fois un modèle de l'ambiance construit, celui-ci est utilisé pour évaluer des signaux de test. Si un signal de test correspond au modèle établi, alors il est considéré comme normal (nouvelle réalisation d'un signal d'ambiance) ; s'il ne correspond pas au modèle, alors il est considéré comme anormal. Le procédé selon l'invention est également caractérisé en ce qu'il peut mettre à jour un modèle en tenant compte des signaux de test.

L'objet de l'invention concerne un procédé pour détecter des évènements anormaux dans un environnement donné, par analyse de signaux audio enregistrés dans ledit environnement, le procédé comportant une étape de modélisation d'une ambiance normale par au moins un modèle et une étape d'utilisation du ou desdits modèles, le procédé comportant au moins les étapes suivantes :
Une étape de construction de modèle comportant au moins les étapes suivantes :

a) une étape d'initialisation non supervisée de Q groupes consistant en un groupement par classes, ou sous-espace de l'ambiance normale, des données audio représentant les signaux d'apprentissage $S_A$, Q est fixé et supérieur ou égal à 2,
b) une étape de définition d'un modèle de normalité constitué de classifieurs SVM 1-classe, chaque classifieur représente un groupe, chaque groupe de données d'apprentissage définit une sous-classe afin d'obtenir un modèle de normalité constitué de plusieurs classifieurs SVM 1-classe chacun des classifieurs étant adapté à un groupe ou sous-ensemble des données dites normales dérivées des signaux d'apprentissage représentatifs de l'ambiance,
c) une étape (3.3) d'optimisation des groupes qui utilise le modèle obtenu à l'étape (3.2) afin de redistribuer les données dans les Q différents groupes, les données aberrantes correspondant à des valeurs qui appartiennent aux groupes rejetés,
d) la répétition des étapes b et c jusqu'à vérifier un critère d'arrêt, $C_1$, et obtenir un modèle M,

L'étape d'utilisation du ou des modèles M issus de l'étape de construction comportant au moins les étapes suivantes :

e) l'analyse d'un signal audio inconnu $S_T$ issu de l'environnement à analyser, le signal audio inconnu est comparé au modèle M issu de l'étape de construction de modèle, et attribue pour chaque classifieur SVM 1-classe un score fq, et
f) une comparaison de l'ensemble des scores fq obtenus par les classifieurs SVM 1-classe à l'aide de règles de décision afin de déterminer la présence ou non d'une anomalie dans le signal audio analysé.

Selon un mode de réalisation, les données audio étant associées à des informations de segmentation, le procédé attribue une même valeur de score fq à un ensemble de données constituant un même segment, un segment correspondant à un ensemble de trames similaires et consécutives du signal audio, ladite valeur de score étant obtenue en calculant la valeur moyenne ou la valeur médiane des scores obtenus pour chacune des trames du signal analysé.

On utilise, par exemple, des classifieurs SVM 1-classe avec contraintes binaires.

Selon une variante de mise en oeuvre du procédé, on détermine plusieurs modèles Mj, chaque modèle étant obtenu en utilisant différents critères d'arrêt $C_1$ et/ou différentes d'initialisation I, et on retient un seul modèle en utilisant des critères statistiques ou des heuristiques.

Selon un mode mise en oeuvre du procédé, on détermine et on retient plusieurs modèles Mj lors de l'étape de construction de modèle, pour chacun des modèles Mj on analyse le signal audio et on détermine la présence ou l'absence d'anomalies dans le signal audio, puis on fusionne ou compare ces résultats afin de décréter la présence ou non d'une anomalie dans le signal.

Lors de l'étape d'optimisation des groupes, on modifie, par exemple, le nombre Q de groupes en créant/supprimant un ou plusieurs groupes ou sous-classes du modèle.

Lors de l'étape d'optimisation des groupes, on modifie, par exemple, le nombre Q de groupes par fusion/scission d'un ou plusieurs groupes ou sous-classes du modèle.

Il est possible de mettre à jour le modèle utilisé lors de l'étape d'utilisation d) en exécutant une des étapes suivantes : l'ajout de données ou signaux audio ou descripteurs acoustiques extraits des signaux audio dans un groupe, la suppression de données dans un groupe, la fusion de deux groupes ou plus, la scission d'un groupe en au moins deux groupes, la création d'un nouveau groupe, la suppression d'un groupe existant, la mise en veille du classifieur associé à un groupe, le réveil du classifieur associé à un groupe

Le procédé peut utiliser lors de l'étape c) un critère de répartition optimale des signaux audio dans les Q différents groupes choisi parmi la liste suivante :

- la fraction des données audio qui changent de groupe après une itération inférieure à une valeur seuil prédéfinie,
- un nombre maximum d'itérations atteint,
- un critère d'information sur les données audio et la modélisation de chaque groupe atteignant une valeur seuil prédéfinie.

On peut utiliser la méthode K_moyennes pour l'étape d'initialisation de groupes.

L'invention concerne aussi un système pour déterminer des évènements anormaux dans un environnement donné, par analyse de signaux audio détectés dans ledit environnement caractérisé en ce qu'il comporte au moins :

- un capteur acoustique de sons, de bruits sonores présents dans une zone à surveiller relié à un dispositif contenant un filtre et un convertisseur analogique-numérique,
- un processeur comprenant un module de prétraitement des données, et un module d'apprentissage,
- une base de données comprenant des modèles correspondant à des classes de paramètres acoustiques représentatifs d'un environnement acoustique considéré comme normal
- un ou plusieurs capteurs acoustiques relié chacun à un dispositif comprenant un filtre et un convertisseur analogique numérique
- un processeur comprenant un module de prétraitement puis un module de reconnaissance des données traitées, le module de prétraitement est relié à la base de données, adapté à exécuter les étapes du procédé,
- un moyen de visualisation ou de détection des évènements anormaux.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un exemple de système de détection selon l'invention,
- La figure 2, la succession des étapes mises en oeuvre par le procédé selon l'invention pour l'analyse d'un signal audio,
- La figure 3, les étapes de la modélisation concurrentielle selon l'invention,
- La figure 4, une succession d'étapes pour optimiser le choix de modèles,
- La figure 5, un exemple de processus d'analyse de signaux audio,
- La figure 6, les étapes exécutées lors de la prise de décision, et
- La figure 7, une représentation d'une fonction charnière utilisée dans le procédé selon l'invention,
- La figure 8 illustre la frontière obtenue autour d'une classe à modéliser.

La description qui suit est donnée à titre illustratif et nullement limitatif pour une surveillance et une détection d'événements audio anormaux, tels que des cris, dans un environnement correspondant par exemple à un quai de gare ou de transports en commun.

Afin de former l'espace de représentation dans lequel les signaux seront modélisés, les données peuvent être utilisées directement et/ou normalisées et/ou enrichies d'informations complémentaires (moments pour tout ou partie des descripteurs) et/ou projetées dans un espace de représentation différent et/ou échantillonnées, dans ce dernier cas seule une partie des descripteurs est conservée, le choix pouvant être réalisé par une expertise ou par application de tout algorithme de sélection de variables (sélection des paramètres - dans l'espace - ou sélection des données - dans le temps) connu de l'Homme du métier.

On propose, par exemple, de compléter les vecteurs de paramètres des dérivées premières (vitesse) et secondes (accélération) pour chacun des descripteurs acoustique. Egalement, il est possible d'estimer des coefficients de normalisation en moyenne (nulle) et variance (unitaire) pour l'ensemble des paramètres à partir des données d'entrainement, puis d'appliquer ces coefficients aux données d'entrainement et de test.

Lorsque le procédé utilise une étape de segmentation automatique du flux audio, cette dernière pourra être réalisée en utilisant, par exemple, le principe du dendrogramme décrit dans la demande de brevet EP2422301 précitée. Toute autre méthode prenant la forme d'un processus en ligne, c'est-à-dire dont le traitement s'effectue au fil de l'eau afin d'être capable dans un contexte de surveillance de segmenter le flux audio dans les signaux en temps réel, peut être utilisée.

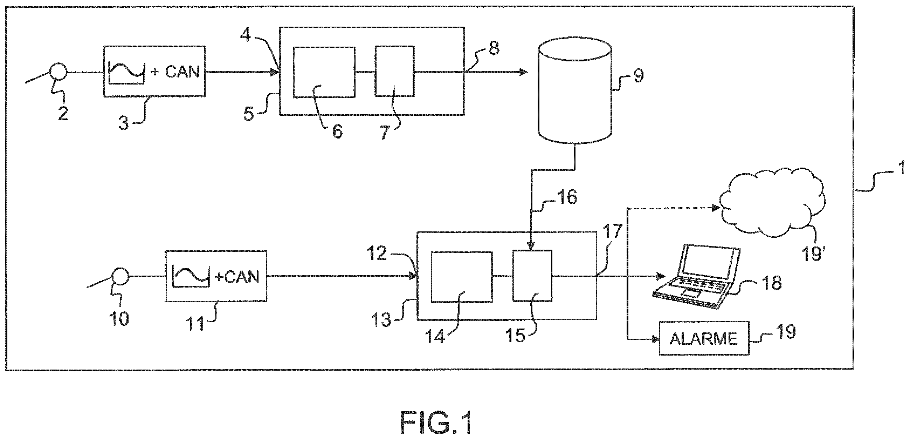

La figure 1 schématise un exemple d'architecture du système permettant la mise en oeuvre du procédé selon l'invention.

Le système comprend au moins un capteur acoustique de sons, de bruits sonores présents dans une zone à surveiller ou dont on souhaite faire une analyse d'événements sonores. Les signaux reçus sur ce capteur acoustique 2 sont transmis, tout d'abord à un dispositif 3 contenant un filtre et un convertisseur analogique-numérique ou CAN connus de l'Homme du métier, puis via une entrée 4 à un processeur 5 comprenant un module 6 de prétraitement des données, y compris l'extraction de la représentation, puis un module d'apprentissage 7. Le modèle généré lors d'une phase d'apprentissage est transmis via une sortie 8 du processeur 5 à une base de données 9. Cette base de données contient un ou plusieurs modèles correspondant à un ou plusieurs environnements acoustiques appris et considérés comme normaux. Ces modèles sont initialisés lors d'une phase d'apprentissage et pourront être mis à jour au cours du fonctionnement du système de détection selon l'invention. La base de données est utilisée pour la phase de détection d'événements sonores anormaux.

Le système comprend, pour la détection des évènements audio anormaux, au moins un capteur acoustique 10. Le capteur acoustique 10 est relié à un dispositif 11 comprenant un filtre et un convertisseur analogique numérique ou CAN. Les données détectées par un capteur acoustique et mises en forme par le filtre sont transmises à un processeur 13 via une entrée 12. Le processeur comprend un module de prétraitement 14, y compris l'extraction de la représentation, puis un module 15 de détection. Le module de détection reçoit les données à analyser, et un modèle depuis la base de données via une liaison 16 qui peut être filaire ou non. A l'issue du traitement des informations, le résultat « événement audio anormal » ou « évènement audio normal » est transmis via la sortie 17 du processeur soit vers un dispositif de type PC 18, avec affichage de l'information, soit vers un dispositif déclenchant une alarme 19 ou vers un système 19' de redirection du flux vidéo et de l'alarme.

Les capteurs acoustiques 2 et 10 peuvent être des capteurs présentant des caractéristiques similaires ou identiques (type, caractéristiques et positionnement dans l'environnement) afin de s'affranchir des différences de mise en forme des signaux entre les phases d'apprentissage et de test.

La transmission des données entre les différents dispositifs peut être effectuée via des liaisons filaires, ou encore des systèmes sans fil, tels que les systèmes Bluetooth, WiFi, WiMax,...

Dans le cas d'un système mettant en oeuvre un unique processeur, les modules 3 et 5 (aussi bien que les modules 11 et 13) peuvent également être groupés dans un même module comprenant les entrées / sorties respectivement 4,12, 8 et 17.

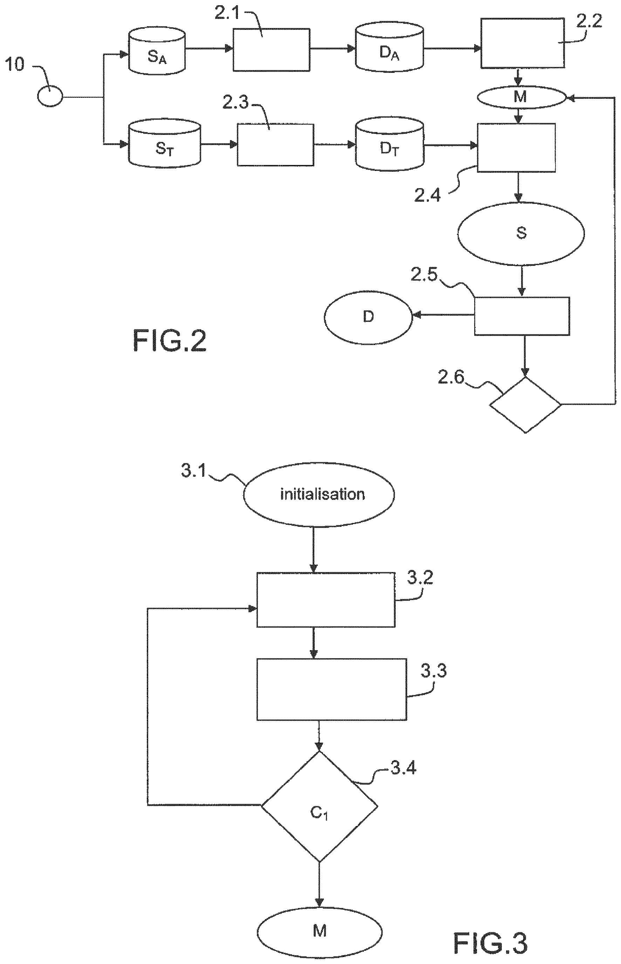

La figure 2 représente un exemple d'enchaînement des étapes mises en oeuvre par le procédé selon l'invention pour, d'une part, la création d'un modèle de l'ambiance à partir d'un signal audio d'apprentissage, et d'autre part, l'exécution de la détection d'anormalité dans un signal audio de test.

Une première étape, 2.1, correspond à l'apprentissage d'un modèle de l'ambiance par le système. Le système va enregistrer, grâce au capteur acoustique, des signaux audio correspondants aux bruits et/ou au fond sonore pour représenter l'ambiance de la zone à surveiller. Les signaux enregistrés sont désignés comme signaux d'apprentissage $S_A$ de l'environnement sonore. La phase d'apprentissage est automatisée et non supervisée. Une base de données (données d'apprentissage $D_A$) est élaborée par extraction de la représentation des signaux audio captés sur la période de temps $T_A$, pour disposer des données d'apprentissage. A l'issue de l'étape 2.1, le procédé dispose d'un modèle de l'ambiance M, sous la forme d'un ensemble de classifieurs SVM 1-classe, chacun optimisé pour un groupe de données (ou sous-classe de la classe « normale »).

La durée $T_A$ pendant laquelle sont enregistrés les signaux d'apprentissage $S_A$ est fixée initialement ou au cours de l'apprentissage. Typiquement, quelques minutes à quelques heures permettront de construire un modèle fiable de l'ambiance, suivant la variabilité des signaux. Pour fixer cette durée au cours de l'apprentissage, il est possible de calculer un critère d'information (par exemple, critère BIC connu de l'homme du métier) et d'arrêter l'enregistrement lorsqu'un seuil sur ce critère est atteint.

La deuxième étape 2.2 correspond à une étape d'analyse d'un flux audio. Cette étape comprend une phase d'extraction des paramètres acoustiques et éventuellement une phase de segmentation automatique du flux analysé. Ces étapes sont similaires à celles utilisées pour la phase d'apprentissage, et dans ce cas on appelle données de test $D_T$ la représentation extraite des signaux de test. Les données de test $D_T$ sont confrontées 2.4 au modèle M obtenu lors de l'étape d'apprentissage 2.1. Le procédé va attribuer à l'aide de chaque classifieur un score fq pour chaque sous-classe q=1,..., Q, en utilisant les fonctions de décision associées aux classifieurs. Un score est attribué à chaque donnée de test. En sortie de l'étape d'analyse, le procédé va disposer d'un ensemble S de valeurs de scores fq.

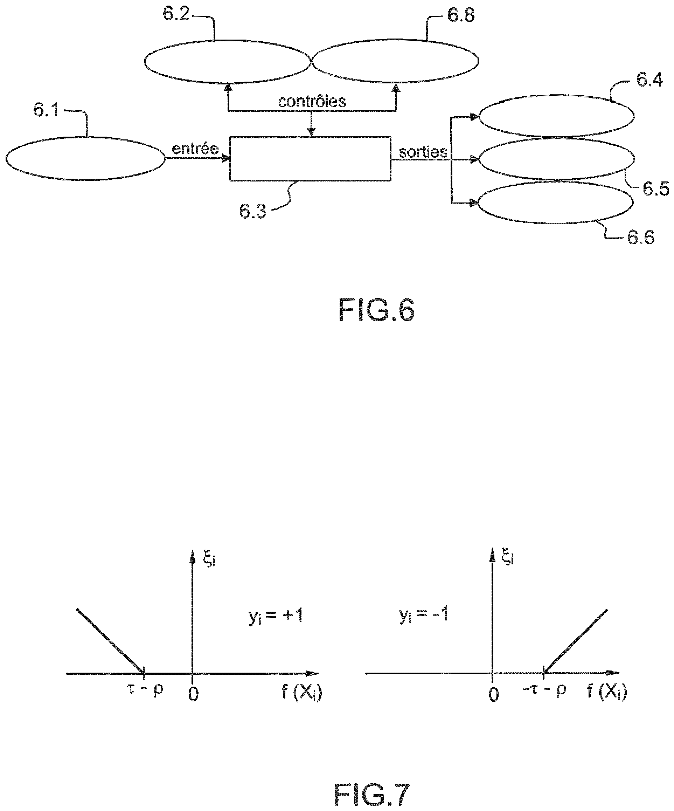

L'étape suivante 2.5 est une étape de décision pour déterminer s'il existe des anomalies dans le signal audio capté analysé. Dans le cas où le signal appartient à une des sous-classes de l'ambiance ou classe « normale », alors au moins l'un des classifieur associe la ou les données de test correspondantes à un score élevé, et indique qu'elle est ou sont similaires aux données d'apprentissage. Dans le cas contraire, les signaux ne font pas partie d'un groupe, autrement dit l'ensemble des classifieurs attribue un score faible à la ou aux données de test correspondantes, les signaux sont considérés comme des événements anormaux. En définitive, le résultat peut se présenter sous la forme d'un ou de plusieurs signaux associés à la présence ou à l'absence d'anomalies audio dans le flux audio analysé. Cette étape est décrite dans le détail, en lien avec la figure 6, dans la suite du document.

Suivant une variante de mise en oeuvre, une étape supplémentaire de mise à jour 2.6 du modèle M de l'ambiance est mise en oeuvre pendant l'utilisation du système ; c'est-à-dire qu'un modèle construit pendant l'étape d'apprentissage peut être modifié. Ladite mise à jour, utilise une ou plusieurs heuristiques - basées par exemple sur les critères d'information BIC ou AIC, connus de l'homme du métier -, analyse le modèle et détermine si il peut ou non évoluer suivant l'une des opérations suivantes (des exemples de mise en oeuvre sont donnés à titre illustratif et non limitatif) :

- Ajout de données ou descripteurs acoustiques extraits des signaux audio dans un groupe si, par exemple, ces données ont été identifiées comme issues d'un signal normal par le classifieur associé à ce groupe,
- Suppressions de données dans un groupe si, par exemple, ces données sont issues de signaux anciens et que des données plus récentes ont été ajoutées au groupe, ou encore pour maintenir un nombre constant de données dans les différents groupes,

- Fusion de deux groupes ou plus si, par exemple, le rapport variance inter-groupe sur variance intra-groupe est inférieur à un seuil fixé,
- Scission d'un groupe en au moins deux groupes si, par exemple, le critère BIC calculé pour ce groupe est inférieur à un seuil fixé. Dans ce cas une étape de regroupement non supervisé, K-moyenne par exemple, est réalisée pour les données du groupe scindé et le critère est mesuré de nouveau sur les groupes obtenus. La scission est réitérée jusqu'à ce que l'ensemble des nouveaux groupes obtiennent une valeur de critère BIC supérieure au seuil fixé.
- Création d'un nouveau groupe si, par exemple, pour un ensemble de données rejetées considérées comme une sous-classe, la valeur du critère d'information BIC est supérieure à un seuil fixé.
- Suppression d'un groupe existant si, par exemple, la quantité de données appartenant à ce groupe, ou la valeur du critère d'information BIC calculée pour ce groupe, est inférieure à un seuil fixé. Les données du groupe supprimées peuvent alors être réparties dans d'autres groupes ou ignorées jusqu'à la prochaine étape d'optimisation des groupes,
- La mise en veille du classifieur associé à un groupe, c'est-à-dire qu'il n'est plus utilisé pour détecter des données normales, si, par exemple aucune donnée détectée comme normale ne l'a été par ce classifieur au cours d'une période de temps fixée,
- Le réveil du classifieur associé à un groupe, après qu'il ait été mis en veille, si, par exemple, une donnée a été détectée comme anormale alors qu'elle aurait été détecté comme normale par ce classifieur.

Eventuellement, un critère d'information, par exemple BIC, peut être calculé pour l'ensemble du modèle avant et après une des opérations ci-dessus pour valider ou annuler l'opération en comparant la valeur obtenu par le critère à un seuil fixé. Dans ce cas, la mise à jour est dite non supervisée car elle est entièrement déterminée par le système.

Alternativement, une variante de mise en oeuvre de l'invention peut s'appuyer sur le ou les opérateurs supervisant le système pour valider les opérations de mise à jour. Dans ce second mode, supervisé, l'opérateur peut notamment, par exemple, contrôler la veille et le réveil de classifieurs associés à des sous-classes de la normalité et ainsi paramétrer le système pour qu'il détecte ou non certains événements récurrents comme des anomalies.

La modélisation concurrentielle utilisée pour déterminer les modèles utilisés pour l'analyse des signaux audio est détaillée en relation avec la figure 3. Ce processus permet de réaliser la répartition optimisée des données d'apprentissage en groupes et l'entrainement conjoint des classifieurs SVM 1-classe. Il est utilisé à l'étape d'apprentissage et appelé à chaque mise à jour du modèle.

La modélisation concurrentielle s'initialise à l'aide de l'ensemble des données d'apprentissage et d'un ensemble d'étiquettes (correspondantes aux groupes). Afin de déterminer les étiquettes associées aux données, ces dernières sont réparties dans au moins deux groupes. Le regroupement initial non supervisé des données (processus connu par le terme anglo-saxon *clustering*) en Q groupes ($Q \geq 2$) est maintenant discuté. Il va notamment permettre de réaliser un modèle de la base de données en Q sous-classes.

Selon une variante de mise en oeuvre, il est possible que seule une partie de la base des données d'apprentissage soit affectée à des groupes. Selon une autre variante, lorsqu'une étape de segmentation automatique du flux audio est mise en oeuvre, il est possible d'appliquer une contrainte afin que l'ensemble des données audio, ou vecteurs de descripteurs, issues d'un même segment soient associées à un même groupe. Par exemple, un vote à majorité associera l'ensemble des vecteurs issus des trames d'un segment donné au groupe auquel le plus grand nombre de vecteurs de ce segment sont associés individuellement.

L'invention utilise pour l'initialisation 3.1 des groupes, des méthodes connues de l'homme de métier. Il est possible de citer en exemple l'approche K-moyennes ou tout autre méthode de partitionnement de l'espace. Le regroupement s'effectue en se basant sur des descripteurs acoustiques suivant des critères géométriques dans l'espace de représentation (distances Euclidienne, Bhattacharyya, Mahalanobis, connues de l'homme de métier) ou bien sur des critères acoustiques spécifiquement issues du signal.

L'étape 3.2 ou optimisation du modèle M a pour objectif d'entraîner les classifieurs. Chaque classifieur, un SVM 1-classe, est entraîné sur un groupe différent. Il y a donc autant de classifieurs que de groupes, et chaque groupe de données d'apprentissage définit une sous-classe. A l'issue de cette étape, le procédé dispose d'un modèle de normalité constitué de plusieurs classifieurs SVM 1-classe, chacun étant adapté à un groupe, ou sous-ensemble des données dites normales dérivées des signaux d'apprentissage représentatifs de l'ambiance.

L'étape suivante 3.3, ou optimisation des groupes, a pour objectif la redistribution des données audio d'apprentissage dans chaque groupe, une étiquette étant associée à chaque donnée audio d'apprentissage. Le procédé selon l'invention, pour répartir les données dans les différents groupes utilise le modèle obtenu au cours de l'étape d'optimisation du modèle.

Une façon de réaliser l'optimisation des étiquettes associées aux données consiste, par exemple, étant donné un modèle, à exécuter une étape de décision. Une possibilité pour redéfinir les groupes est d'évaluer le score qu'obtiennent les données d'apprentissage confrontées à chacun des classifieurs SVM 1-classe obtenus lors de l'étape 3.2 de la modélisation. Les données sont alors redistribuées de façon à appartenir au groupe pour lequel le score est le plus élevé.

Lorsque des informations de segmentation du signal audio sont disponibles, il est possible ici encore, de contraindre l'ensemble des données issues des trames d'un même segment à être associées à un même groupe.

Selon une autre variante, lorsque le score d'une donnée est trop faible (comparé à un seuil fixé ou déterminé dynamiquement), il est possible de considérer cette donnée comme un point aberrant (connu dans le contexte de l'apprentissage automatique par le terme anglo-saxon *outlier*), la donnée n'est alors associée à aucun groupe. Egalement, il est possible, si le score de plusieurs classifieurs est élevé par rapport à un ou plusieurs seuils fixés, d'associer une même donnée à plusieurs groupes. Il est possible, enfin, d'utiliser des éléments de logique floue, connus de l'Homme du métier pour nuancer l'appartenance d'une donnée à un ou plusieurs groupes. Les données associées à aucun groupe (dites données rejetées) sont considérées comme étant des exemples (rares) d'une classe anormale. Ceci participe notamment à isoler naturellement les données anormales qui pourraient être présentes dans l'ensemble d'apprentissage.

Le procédé réalise une optimisation itérative 3.6 par directions alternées. Le processus d'optimisation du modèle 3.2 et le processus d'optimisation des groupes 3.3 sont réalisés tour à tour jusqu'à l'atteinte 3.4 d'un critère d'arrêt $C_1$. Le processus est qualifié de processus d'optimisation par directions alternées car deux optimisations successives sont réalisées : d'une part, les paramètres de chacun des classifieurs SVM 1-classe sont entrainés, ou estimés, et d'autre part, la distribution des données dans les groupes est optimisée.

Une fois le critère d'arrêt $C_1$ vérifié, le modèle M (ensemble de classifieurs SVM 1-classe) est conservé. Comme critère d'arrêt $C_1$, il est possible d'utiliser l'un des critères suivant :

- la fraction des données audio ou des segments audio qui changent de groupe après une itération est inférieure à une valeur seuil prédéfinie, ce qui inclue le fait qu'aucune donnée ne change de groupe ;
- un nombre maximum d'itérations est atteint,
- un critère d'information (du type BIC ou AIC, connus de l'homme du métier) sur les données audio et la modélisation de chaque groupe atteint une valeur seuil prédéfinie,
- une valeur seuil fixée ou non, maximum ou minimum, concernant l'ensemble des groupes est atteinte.

Avantageusement, le procédé selon l'invention évite d'exécuter une optimisation conjointe connue de l'art antérieur présentant des difficultés dans sa réalisation, car l'optimisation des groupes et l'optimisation de la description sont rarement du même type (problème combinatoire pour les groupes, et généralement un problème quadratique pour la description). Les modèles sont également appris sur des données de moins en moins polluées, les données aberrantes (*outliers*) étant rejetées, et les modèles sont de plus en plus précis. En particulier, les frontières entre les sous-classes sont plus nettes du fait de la distribution des données dans chaque groupe sur la base de la modélisation de chacune des sous-classes.

Selon une variante de mise en oeuvre de l'invention il est possible que, lors de l'étape d'optimisation des groupes, le nombre de groupes soit modifié en suivant l'une des quatre opérations suivantes telles que décrites pour le processus de mise à jour du modèle en cours d'utilisation :

- La création / la suppression de groupes ou sous-classes du modèle,
- La fusion / la scission de groupes ou sous-classes du modèle.

On note néanmoins que les opérations de mise à jour au cours de l'apprentissage sont toujours réalisées de manière non supervisée, c'est-à-dire qu'aucun opérateur n'intervient au cours de la construction du modèle.

Les sous-classes de l'ambiance sont déterminées de façon non supervisées et une donnée peut changer de groupe (ou sous-classe) sans conséquence.

L'ensemble des étapes 3.2, 3.3, 3.4 et 3.6 est appelé modélisation concurrentielle, car elle met en concurrence les sous-classes pour savoir à quelle groupe appartient une donnée. Le modèle issu de la modélisation concurrentielle est unique pour une initialisation I et un critère d'arrêt $C_1$ fixé. La suite donne des exemples de la façon d'utiliser différentes initialisation et/ou différent critères d'arrêt, et traiter les différents modèles obtenus.

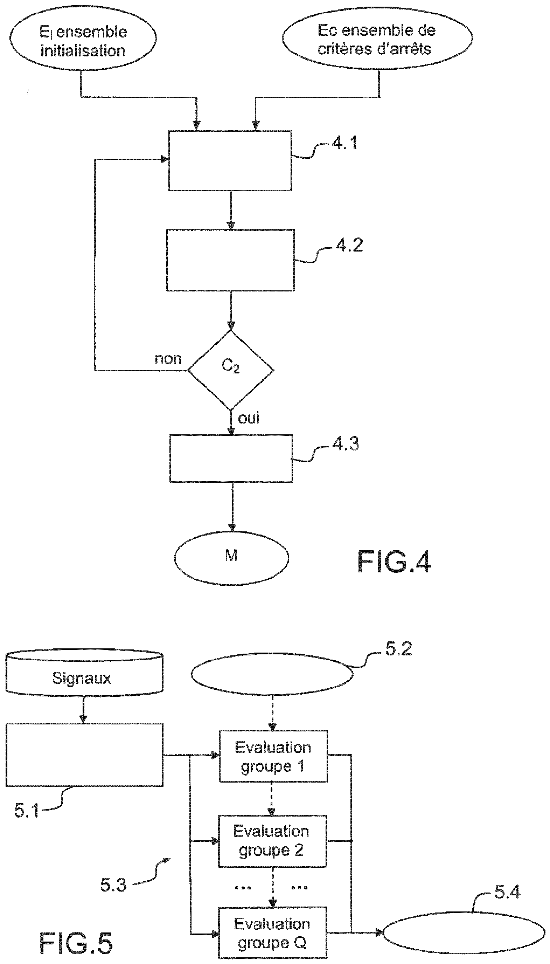

La figure 4 décrit un exemple qui a pour objectif d'évaluer plusieurs initialisations I des groupes et/ou plusieurs critères d'arrêts $C_1$ ; les initialisations et les critères d'arrêt différents sont, par exemple, ceux proposés au début de la description de la figure 3. Ce processus peut être mis en oeuvre lorsqu'un ensemble d'initialisations $E_I$ et/ou un ensemble de critères d'arrêt $E_C$ sont disponibles. Ce processus comporte, par exemple, les étapes suivantes :

- une étape, 4.1, de sélection d'une initialisation I et d'un critère d'arrêt $C_1$ parmi les ensembles $E_I$ et $E_C$,
- une étape, 4.2, de modélisation concurrentielle MC telle que décrite à la figure 3, et utilisant l'initialisation I et le critère d'arrêt $C_1$ précédemment sélectionnés à l'étape 4.1,
- une étape de décision basée sur un critère d'arrêt, $C_2$, permettant soit d'orienter le processus vers une nouvelle étape 4.1 de sélection, soit de mettre fin au processus de recherche,
- une étape 4.3, de recherche du modèle optimal parmi ceux obtenus au cours des différentes modélisations concurrentielles 4.2.

Si le nombre d'initialisations possibles est fini, le critère d'arrêt $C_2$ peut être omis, cela revient à s'arrêter lorsque tous les couples initialisation I/critère d'arrêt $C_1$ disponibles ont été proposés à la modélisation concurrentielle 4.2. Dans ce même cas, un critère d'arrêt $C_2$ peut permettre d'arrêter prématurément la recherche si une solution suffisamment satisfaisante a été atteinte, ceci sans caractère obligatoire. En revanche, si le nombre d'initialisations possibles est infini, le critère d'arrêt $C_2$ est obligatoire. Le critère d'arrêt $C_2$ se présente, par exemple, sous l'une des formes suivantes:

- évaluer les modèles au fur et à mesure et arrêter la recherche lorsqu'un seuil est atteint (critère d'information, etc.) ; cela revient notamment à utiliser une méthode d'évaluation et/ou de comparaison des différents modèles, telle qu'utilisée à l'étape 4.3,
- une limite sur le nombre d'initialisation différentes à évaluer, si on utilise des méthodes d'initialisation aléatoires, ou si on exécute une méthode unique et on fait varier un paramètre (par exemple le paramètre K d'une approche K-moyennes est incrémenté jusqu'à une valeur fixée),
- toute autre méthode ayant pour effet soit d'arrêter prématurément l'exploration d'un nombre fini d'initialisations, soit d'arrêter une exploration d'un nombre infini d'exploration.

L'étape 4.3 a pour objectif, lorsque plusieurs modèles ont été obtenus à l'issu des différents appels à l'étape de modélisation concurrentielle 4.2, de sélectionner un modèle unique, par exemple. La sélection s'opère, par exemple, sur la base de critères d'information et/ou d'heuristiques et/ou de toute autre technique pouvant caractériser une telle modélisation. Par exemple, le critère d'information BIC est calculé pour chacun des modèles obtenus et le modèle pour lequel la valeur maximale est sélectionnée, celle qui optimise le critère. Selon un autre exemple, une heuristique consiste à conserver le modèle qui nécessite le moins de vecteurs de support, en moyenne, pour l'ensemble des classifieurs SVM 1-classe qui composent ce modèle (la notion de vecteurs de support est précisée après dans la présentation détaillée du problème et de l'algorithme de résolution associés aux classifieurs SVM 1-classe).

Selon une variante de mise en oeuvre, plusieurs modèles peuvent être sélectionnés et utilisés pour analyser le signal audio afin de décider de la présence ou non d'anomalies dans le signal audio en appliquant les étapes du procédé décrites ci-avant. Cette sélection multiple peut s'opérer par l'utilisation de différentes méthodes de sélection du meilleur modèle qui peuvent, éventuellement, sélectionner des modèles différents. Egalement, il est possible de retenir plus d'un modèle au sens d'une méthode de sélection (les meilleurs). Disposer de plusieurs modèles permet, entre autre, lors de la prise décision de fusionner les informations d'évaluation issues desdits modèles, les informations correspondant à la présence ou non d'anomalies. Des méthodes de fusion de décision, connues de l'homme du métier, sont alors utilisées. Par exemple lorsque l'analyse d'un signal audio avec N modèles a conduit à trouver un nombre X de présence d'anomalies dans le signal audio analysé et Y sans anomalies, avec X inférieur à Y, alors le procédé, selon un vote à majorité, va considérer le signal sans anomalie.

La figure 5 schématise un exemple d'étapes mises en oeuvre lors de l'étape d'analyse des signaux audio à traiter $S_T$, utilisant les modèles générés lors de l'étape d'apprentissage.

A l'issue de l'étape d'apprentissage, chaque groupe de données ou sous-classe est représentée par un classifieur 1-classe, associé à une fonction de décision permettant d'évaluer une donnée audio. Le score indique l'appartenance de ladite donnée au groupe ou sous-classe représenté par le classifieur.

Au cours de l'étape d'analyse, de signaux audio, les actions nécessaires à la représentation du signal audio sont réalisées dans la même configuration qu'au cours de l'étape d'apprentissage : extraction des paramètres, normalisation, segmentation, etc.

L'étape 5.1 permet d'extraire les informations de représentation des signaux audio. Au moyen 5 .2 du modèle M généré par la phase d'apprentissage (2.2 / 3.5), le procédé va évaluer 5.3 les informations de représentation ou vecteurs représentant les données du signal à chacun des Q classifieurs issus de l'étape d'apprentissage : classifieur du « groupe 1 », classifieur du « groupe 2 », jusqu'au classifieur du « groupe Q ». L'évaluation conduit à un ensemble de scores 5.4 qui constituent un vecteur complémentaire de représentation qui est traité au cours de l'étape de décision utilisée pour la détection de signaux anormaux.

Selon une variante, lorsque les données audio sont les vecteurs extraits pour chaque trame de signal analysée, les scores issus de l'étape 5.3 peuvent être intégrés sur un support temporel en tenant compte des informations de segmentation. Pour cela, le même score est attribué à l'ensemble des données audio (trames dans ce cas précis) constituant un même segment. Ce score unique est déterminé à partir des scores obtenus individuellement par chacune des trames. On propose, par exemple, de calculer la valeur moyenne ou encore la valeur médiane.

La figure 6 schématise les étapes exécutées par le procédé selon l'invention pour l'étape de décision. Le procédé prend en compte l'ensemble des scores 6.1 avec des règles de décision 6.2 s'appuyant par exemple sur des paramètres 6.8 tels que des seuils, les poids associés aux différentes règles, etc. pour générer après prise de décision, 6.3, des états des signaux d'alarmes 6.4, des informations générées 6.5, ou des actions 6.6.

Les signaux d'alerte générés sont destinés à un opérateur ou un système tiers, et peuvent être de nature diverses, par exemple : différent niveaux d'alarme, ou des indications sur la sous-classe « normale » la plus proche du signal d'alarme, ou encore l'action d'afficher à un opérateur l'ensemble des caméras surveillant la zone dans laquelle se trouve le capteur acoustique d'où provient le signal détecté comme anormal.

Un exemple de règle de décision est maintenant donné. Elle repose sur la comparaison de l'ensemble des valeurs de scores obtenus, pour chacune des données de test, avec une ou plusieurs valeurs seuils Vs fixées à l'avance ou déterminés au cours de l'apprentissage ; par exemple, un seuil peut être fixé à la valeur du $5^e$ percentile pour l'ensemble des scores obtenus sur les données d'apprentissage. La valeur de seuil Vs est dans ce cas un par paramètre 6.8 pour la règle de décision 6.2, qui peut s'exprimer comme suit : « si au moins un classifieur attribue un score supérieur à Vs, alors la donnée provient d'un signal d'ambiance, sinon, il s'agit d'un signal anormal ».

Le procédé selon l'invention s'appuie sur des classifieurs SVM 1-classe. Les $v$-SVM et SVDD (*Support Vector Data Description*) sont deux méthodes connues de l'homme du métier pour construire un classifieur SVM 1-classe. Nous allons présenter maintenant un problème et un algorithme originaux, pour la mise en oeuvre suivant l'une ou l'autre, ou les deux, variantes suivantes :

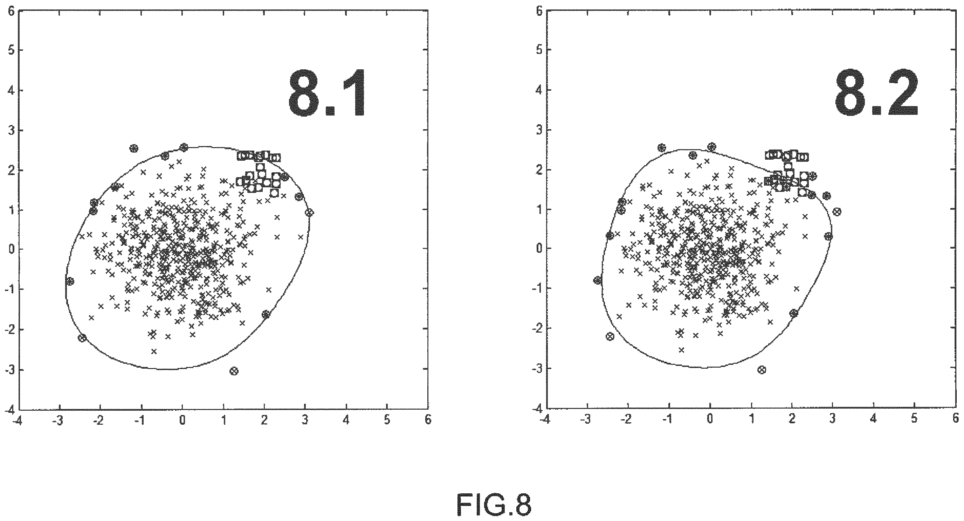

- Contraintes binaires : un classifieur est contraint à rejeter les données n'appartenant pas à la classe qu'il a pour tâche de modéliser, et non à les ignorer ; ceci permet d'affiner le modèle, notamment parce que les données rejetées sont mieux isolées par le modèle. La figure 8 illustre la frontière obtenue autour d'une classe à modéliser (symboles croix), et en présence d'une seconde classe symboles carrés), par un classifieur SVM 1-classe sans contraintes binaires 8.A ou avec contraintes binaires 8.B. Dans le premier cas, la seconde classe est ignorée, dans le second cas, elle est rejetée.
- Démarrage à chaud : l'algorithme de résolution peut être initialisé à partir d'une solution existante afin de réduire le temps de réentrainement lorsque des données changent de groupe, c'est-à-dire lorsque les étiquettes des données d'entrainement changent.

La mise en oeuvre d'un classifieur SVM 1-classe permettant l'exécution de ces variantes va maintenant être exposée.

$$T = \{(x_i, l_i), i = 1 \dots n\} \in (\mathbb{R}^d \times \{1, 2, \dots, Q\})^n$$

Soit un ensemble d'apprentissage, cette expression reflète le résultat d'un regroupement des données. Dans le contexte de l'invention, chaque $x_i$ est un vecteur de paramètres acoustiques, $n$ est le nombre de vecteurs disponibles pour l'apprentissage, $d$ est le nombre de descripteurs acoustiques utilisés, et ainsi $\mathbb{R}^d$ l'espace d'observation. Chaque $l_i$ correspond à l'étiquette, ou numéro du groupe auquel la donnée $x_i$ est associée. Afin d'entraîner le modèle 1-classe correspondant au groupe $q \in \{1 \dots Q\}$, on utilise un ensemble d'apprentissage spécifique

$$T^{(q)} = \left\{ \left(x_i, y_i^{(q)}\right), i = 1 \dots n\right\} \in (\mathbb{R}^d \times \{-1, +1\})^n \quad \text{avec :}$$

$$y_i^{(q)} = \begin{cases} +1 \text{ si } l_i = q \\ -1 \text{ si } l_i \neq q \end{cases}$$

Dans la suite de la description, l'exposant (q) n'est pas reporté pour améliorer la lisibilité. Le problème SVM 1-classe, connu de l'homme du métier, est le suivant :

$$f_{\mathcal{L},T}^* \in \arg\min_{f \in H} \lambda \|f\|_H^2 + \mathcal{R}_{\mathcal{L},T}(f)$$

où $f$ est une application, permettant d'établir un score avec :

$$f: \quad \mathbb{R}^d \mapsto \mathbb{R}$$
$$x \to \langle w, \phi(x) \rangle_H - b$$

L'opérateur $\langle \cdot, \cdot \rangle_H : H \times H \mapsto \mathbb{R}$ représente le produit scalaire de deux éléments dans un espace de Hilbert $H$ à noyau reproduisant $\kappa$ et $\phi : \mathbb{R}^d \mapsto H$ l'application de projection dans cet espace. Ainsi $\kappa(x,x') = \langle \phi(x),(\phi(x') \rangle_H$ et en utilisant un noyau Gaussien $\kappa(x,x') = \exp(-\|x - x'\|/2\sigma^2)$ où $\sigma$ la largeur du noyau est un paramètre à fixer. Les paramètres $w$ et $b$ déterminent un hyperplan séparateur dans l'espace $H$ qui résulte en un volume autour des données de $T$ dans l'espace d'observation. Ainsi, $f(x_i)$ est positif si $x_i$ est compris dans ce volume, c'est-à-dire si $\phi(x_i)$ est au-delà de l'hyperplan, et négatif sinon. Enfin, le terme de régularisation $\mathcal{R}_{\mathcal{L},T}(f)$ correspond au risque empirique :

$$\mathcal{R}_{\mathcal{L},T}(f) = \frac{1}{n} \sum_{i=1}^{n} \omega_i \mathcal{L}(f(x_i), y_i)$$

où pour chaque élément $x_i$ un poids $\omega_i$ est fixé.

La fonction de perte charnière généralisée représentée à la figure 7 est donnée par :

$$\mathcal{L}(f, y) = \max\{0, -yf\}$$

Cette fonction charnière va permettre de discriminer les données. Elle attribue à une donnée une pénalisation si cette donnée viole l'hyperplan séparateur. Une pénalisation non nulle est attribuée aux données telles que $y_i = +1$ (respectivement $y_i = -1$) situés en-deçà (respectivement au-delà) de l'hyperplan séparateur. Ce dernier est déterminé de manière unique par $w^* \in \mathbb{R}^n$ et $b^* \in \mathbb{R}$ qui eux-mêmes déterminent $f_{\mathcal{L},T}^*$ de manière unique. A partir de ces éléments il est possible de reformuler le problème SVM proposé sous la forme suivante, en prenant en compte le facteur biais b :

$$(w^*, b^*) \in \operatorname*{argmin}_{w,b,\xi} \frac{1}{2} \|w\|_H^2 + \frac{1}{2} b^2 - b + \sum_{i=1}^{n} C_i \xi_i$$

sous contraintes $\begin{cases} \xi_i \geq 0 \\ \xi_i \geq -y_i(\langle w, \phi(x_i) \rangle_H - b) \end{cases}$

où $C_i = \omega_i/2\lambda n$. Cette formulation du problème n'est pas sans rappeler à l'homme du métier le problème $v$-SVM ; on note cependant l'ajout du terme $\frac{1}{2} b^2$ dont l'intérêt va être explicité ci-dessous, et la présence du terme $y_i$ dans la seconde contrainte qui reflète l'utilisation des contraintes binaires.

En utilisant des multiplicateurs de Lagrange $\alpha_i \in \mathbb{R}$ et les conditions de Karush-Kuhn-Tucker, le problème dual s'exprime sous forme matricielle :

$$\max_{\alpha \in \mathbb{R}^n} W(\alpha) := \frac{1}{2} \alpha^T H \alpha + \alpha^T y$$

sous contraintes $0 \leq \alpha_i \leq C_i$
avec $H_{i,j} = -y_i y_j(\kappa(x_i,x_j)+1)$

De plus, il apparait lors de la réécriture du problème une expression analytique pour le biais, directement issue de l'ajout du terme quadratique du biais :

$$b^* = 1 - \sum_{i=1}^{n} \alpha_i y_i = 1 - \alpha^T y$$

**Algorithme de résolution**

Une méthode par décomposition basée sur l'algorithme SMGO (*Sequential Maximum Gradient Optimization*) est ici appliquée au problème SVM 1-classe dual présenté ci-dessus, dont le gradient est :

$$g = H\alpha + y$$

L'algorithme optimise la solution $\alpha$ dans la direction du gradient. Soit un ensemble $I_{WS}$ de points à modifier dans le vecteur $\alpha$ :

$$I_{WS} = \left\{ i: |g_i| \in \left\{ \begin{array}{c} q \text{ plus grandes valeurs absolues} \\ \text{de } g_k, \, k = 1 \ldots n; \text{ avec} \\ \alpha_i < C_i \text{ si } g_i > 0 \\ \alpha_i > 0 \text{ si } g_i < 0 \end{array} \right\} \right\}$$

On peut alors donner la définition du gradient partiel :

$$\tilde{g} = \begin{cases} g_i \text{ si } i \in I_{WS} \\ 0 \text{ sinon} \end{cases}$$

La mise à jour de la solution est définie par :

$$\alpha := \alpha + \lambda^* \tilde{g}$$

et la mise à jour du gradient par :

$$g := g + \lambda^* H\tilde{g}$$

On en déduit que $\lambda^* \in \text{argmax}_\lambda \, W(\alpha + \lambda g)$ vaut :

$$\lambda^* = -\frac{\tilde{g}^T g}{\tilde{g}^T H\tilde{g}}$$

De plus, afin que la solution reste dans le domaine acceptable $0 \le \alpha_i \le C_i \; \forall i = 1...n$ on applique les bornes suivantes déterminées là encore par des calculs élémentaires :

$$\lambda^* \le \lambda_{sup} = \min\left( \min_i \left( \frac{C_i - \alpha_i}{\tilde{g}_i} \right), \min_j \left( \frac{-\alpha_j}{\tilde{g}_j} \right) \right)$$

$$\lambda^{*} \leq \lambda_{inf} = \max\left(\max_{i}\left(\frac{-\alpha_{i}}{\tilde{g}_{i}}\right), \max_{j}\left(\frac{C_{j} - \alpha_{j}}{\tilde{g}_{j}}\right)\right)$$

où $i \in \{k: g_k > 0\}$ et $j \in \{k: g_k < 0\}$.

Enfin, l'algorithme nécessite un critère d'arrêt qui peut être un seuil sur la norme moyenne du gradient partiel ou encore la mesure d'écart de dualité (*duality gap*) familière de l'homme du métier. La procédure suivante décrit l'algorithme de résolution dans son ensemble :

1) Choisir un ensemble de travail $I_{WS}$
2) Déterminer le pas optimal $\lambda^*$
3) Mettre à jour la solution $\alpha$ et le gradient $g$
4) Répéter 1, 2 et 3 jusqu'à atteindre le critère d'arrêt

Une initialisation faisable, c'est-à-dire dans le domaine acceptable, pour les vecteurs $\alpha$ et $g$ est nécessaire. On note que, par défaut, $\alpha_i = 0 \; \forall i = 1 \; ...n$ est une solution acceptable et alors $g = y$ dans ce cas. En revanche, si une solution faisable différente est connue, celle-ci peut être utilisée pour initialisation et on parle alors de « démarrage à chaud » de l'algorithme. L'intérêt de partir d'une solution connue est de minimiser le nombre d'itérations nécessaire pour que l'algorithme converge, c'est-à-dire atteigne le critère d'arrêt.

**Procédure de mise à jour d'une solution**

Nous allons maintenant montrer comment une solution existante peut être mise à jour Ceci permet de bénéficier de la propriété de démarrage à chaud de l'algorithme et évite de relancer une optimisation complète lorsque l'ensemble d'apprentissage $T$ est modifié, c'est-à-dire lorsque la distribution des données dans les groupes est changée.

La procédure de mise à jour est réalisée en trois étapes : un changement de domaine (qui reflète l'évolution des constantes $C_i$), une étape de mise jour des vecteurs solution et gradient, enfin une étape d'optimisation (afin de converger vers un nouvel optimum satisfaisant le critère d'arrêt). Il est également nécessaire de distinguer trois types de mises à jour : la mise à jour incrémentale (de nouvelles données sont ajoutées à $T$), la mise à jour décrémentale (des données sont ôtées de $T$) et enfin le changement d'étiquette (un couple de données $(x_i; y_i)$ dans $T$ devient $(x_i; -y_i)$).

Le changement de domaine est une étape importante lorsque les poids $C_i$ associés aux variables de pénalisation

$$C_i = \frac{1}{\nu n},$$

$\xi_i$ dépendent de $n$ ; c'est le cas par exemple pour les SVM 1-classe où $i = 1, ..., n$ ($\nu \in [0; 1]$). La seconde étape concerne la mise à jour de la solution et de son gradient par décomposition de la matrice $H$. L'avantage majeur de l'approche proposée ici est qu'il n'est pas nécessaire d'avoir recours au calcul d'éléments de $H$ pour le changement de domaine et que seules les colonnes de $H$ correspondantes aux éléments modifiés doivent être évaluées pour la mise à jour. Notons également que cette technique est entièrement compatible avec l'ajout, la suppression ou le changement d'étiquette de plusieurs données simultanément.

**Changement de domaine**

Nous définissons le changement de domaine du problème SVM dual comme la modification des constantes ou poids $C_i$ associés aux variables de pénalisation $\xi_i$. Il s'agit effectivement d'un changement de domaine pour la solution $\alpha$ car $\alpha_i \in [0; C_i]$, $\forall i = 1, ...,n$. Soit $C_i^{(t)}$ la constante appliquée au problème à un instant t et $C_i^{(t+1)}$ la constante appliquée à un instant $(t + 1)$.

Propriété : soit $\theta \in \mathbb{R}^{+*}$ et un couple $(w^*, b^*) \in \mathbb{R}^n \times \mathbb{R}$, solution d'un problème d'optimisation, alors $(\theta w^*, \theta b^*)$ est également solution du problème.

On déduit immédiatement de cette propriété que si a est solution d'un problème d'optimisation avec $\alpha_i \in D^{(t)} := \left[0; C_i^{(t)}\right]$, $\forall i = 1, ..., n$, alors $\theta\alpha$ est une configuration possible pour l'initialisation de l'algorithme, à

$$\theta \alpha_i \in D^{(t+1)} := \left[0; C_i^{(t+1)}\right],$$

condition que $\forall i = 1, ..., n$. Il est alors naturel pour un tel changement de domaine,

$$\theta := \min_i \frac{c_i^t}{c_i^{(t+1)}}.$$

et afin de respecter strictement les inégalités sur les $\alpha_i$, de choisir Il est alors facile de montrer que la solution mise à jour pour refléter le nouveau domaine s'exprime comme :

$$\alpha \leftarrow \theta \alpha$$

$$g \leftarrow \theta g + (1 - \theta) y$$

**Décomposition du gradient**

Soit $n := m + p$, on propose de réécrire $g, H, \alpha$ et $y$ suivant la décomposition suivante :

$$g = \begin{bmatrix} H_{m,m} & H_{m,p} \\ H_{m,p}^T & H_{p,p} \end{bmatrix} \begin{pmatrix} \alpha_m \\ \alpha_p \end{pmatrix} + \begin{pmatrix} y_m \\ y_p \end{pmatrix}$$

On peut alors montrer que :

$$g = \begin{pmatrix} \tilde{g}_m \\ \tilde{g}_p \end{pmatrix} = \begin{bmatrix} g_m \\ H_{m,p}^T \alpha_m + y_p \end{bmatrix} + \begin{bmatrix} H_{m,p} \\ H_{p,p} \end{bmatrix} \alpha_p$$

De cette décomposition, il apparait immédiatement les expressions de mise à jour incrémentale :

$$\alpha_m \leftarrow \begin{pmatrix} \alpha_m \\ \alpha_p \end{pmatrix}$$

$$g \leftarrow \begin{bmatrix} g_m \\ H_{m,p}^T \alpha_m + y_p \end{bmatrix} + \begin{bmatrix} H_{m,p} \\ H_{p,p} \end{bmatrix} \alpha_p$$

Une initialisation pour $\alpha_p$ est nécessaire. Par défaut, on propose de choisir $\alpha_p = 0_p$ (où $0_p$ est un vecteur nul de taille p). De la même manière, les expressions de mise à jour décrémentale sont :

$$\alpha_m \leftarrow \alpha^{\setminus \alpha_p}$$

$$g \leftarrow \tilde{g}_m - H_{m,p} \alpha_p$$

Enfin, dans le cas d'un changement d'étiquettes, il s'agit de modifier les étiquettes de $p$ éléments, soit $y_p \leftarrow -y_p$. Cette modification a également pour conséquence que $H_{p,m} \leftarrow -H_{p,m}$. Soit l'ensemble d'apprentissage $T^{(n)}$ contenant $n$ données. Si une solution $\alpha$ est connue ainsi que le gradient après convergence $g$, alors il est possible de modifier les étiquettes de $p$ données et mettre à jour cette solution afin de relancer un processus d'optimisation en appliquant la formule précédente de décomposition du gradient pour la mise à jour du gradient. Sous réserve que $\alpha$ soit compatible avec le domaine faisable pour $\alpha^{new}$, alors :

$$\alpha^{new} \leftarrow \begin{pmatrix} \alpha^{\setminus \alpha_p} \\ \alpha_p^{new} \end{pmatrix}$$

$$g^{new} \leftarrow \begin{bmatrix} \breve{g}_m - H_{m,p}\alpha_p \\ -H_{m,p}^T\alpha_m - y_p \end{bmatrix} + \begin{bmatrix} -H_{m,p} \\ H_{p,p} \end{bmatrix} \alpha_p^{new}$$

$$y^{new} \leftarrow \begin{pmatrix} y^{\backslash y_p} \\ -y_p \end{pmatrix}$$

Une initialisation pour $\alpha_p^{new}$ est également nécessaire. Par défaut, on propose de choisir $\alpha_p^{new} = 0_p$.

Le procédé et le système selon l'invention permettent une modélisation de données audio par multiples machines à vecteurs de support, de type SVM1-classe comme proposé dans la précédente description. L'apprentissage de chaque sous-classe est réalisé conjointement.

L'invention permet notamment d'adresser le problème de la modélisation d'un ensemble de données audio dans un espace de représentation à N dimensions, N variant de 10 à plus de 1000, par exemple, en présentant une robustesse à l'évolution au cours du temps de l'environnement caractérisé et une capacité à traiter un grand nombre de données en grande dimension. En effet, il n'est pas nécessaire de conserver en mémoire des matrices de grande dimension ; seuls les vecteurs gradient et solution sont à mémoriser.

Le procédé selon l'invention permet de réaliser une modélisation de chaque groupe de données comme une région close (fermée, délimitée) dans l'espace d'observation. Cette approche présente notamment comme avantage de ne pas réaliser un partitionnement de l'espace de représentation, les régions non modélisées correspondant à un événement ou signal anormal. Le procédé selon l'invention conserve donc les propriétés des approches 1-classe connus de l'homme de métier, et en particulier la découverte de la nouveauté (*novelty detection*), qui permet de détecter les événements anormaux ou de créer de nouvelles sous-classes de la classe normale (ambiance) si une densité élevée de données venait à être détectée.

## Revendications

1. Procédé pour détecter des évènements anormaux dans un environnement donné, par analyse de signaux audio enregistrés dans ledit environnement, le procédé comportant une étape de modélisation d'une ambiance normale par au moins un modèle et une étape d'utilisation du ou desdits modèles, le procédé comportant au moins les étapes suivantes :
Une étape (2.1) de construction de modèle comportant au moins les étapes suivantes :

   a) une étape (3.1) d'initialisation non supervisée de Q groupes consistant en un groupement par classes, ou sous-espace de l'ambiance normale, des données audio représentant les signaux d'apprentissage $S_A$, Q est fixé et supérieur ou égal à 2,
   b) une étape (3.2) de définition d'un modèle de normalité constitué de classifieurs SVM 1-classe, chaque classifieur représentant un groupe, chaque groupe de données d'apprentissage définit une sous-classe afin d'obtenir un modèle de normalité constitué de plusieurs classifieurs SVM 1-classe, chacun des classifieurs étant adapté à un groupe ou sous-ensemble des données dites normales dérivées des signaux d'apprentissage représentatifs de l'ambiance,
   c) une étape (3.3) d'optimisation des groupes qui utilise le modèle obtenu à l'étape (3.2) afin de redistribuer les données dans les Q différents groupes, les données aberrantes correspondant à des valeurs qui n'appartiennent pas aux groupes sont rejetées,
   d) la répétition des étapes b et c jusqu'à vérifier un critère d'arrêt, $C_1$, et obtenir un modèle M,

   L'étape d'utilisation du ou des modèles M issus de l'étape de construction comportant au moins les étapes suivantes :

   e) l'analyse (2.4) d'un signal audio inconnu $S_T$ issu de l'environnement à analyser, le signal audio inconnu est comparé au modèle M issu de l'étape de construction de modèle, et attribue pour chaque classifieur SVM 1-classe un score fq, et
   f) une comparaison de l'ensemble des scores fq obtenus par les classifieurs SVM 1-classe à l'aide de règles de décision afin de déterminer (2.5) la présence ou non d'une anomalie dans le signal audio analysé.

**2.** Procédé selon la revendication 1 **caractérisé en ce que** les données audio étant associées à des informations de segmentation, le procédé attribue une même valeur de score fq à un ensemble de données constituant un même segment, un segment correspondant à un ensemble de trames similaires et consécutives du signal audio, ladite valeur de score étant obtenue en calculant la valeur moyenne ou la valeur médiane des scores obtenus pour chacune des trames du signal analysé.

**3.** Procédé selon l'une des revendications 1 à 2 **caractérisé en ce que** l'on utilise des classifieurs SVM 1-classe avec contraintes binaires.

**4.** Procédé selon l'une des revendications 1 à 3 **caractérisé en ce que**, lorsque l'on détermine plusieurs modèles Mj, chaque modèle étant obtenu en utilisant différents critères d'arrêt $C_1$ et/ou différentes d'initialisation I, on retient un seul modèle en utilisant des critères statistiques ou des heuristiques.

**5.** Procédé selon l'une des revendications 1 à 3 **caractérisé en ce que** l'on détermine et retient plusieurs modèles Mj lors de l'étape de construction de modèle, pour chacun des modèles Mj on analyse le signal audio et on détermine la présence ou l'absence d'anomalies dans le signal audio, puis on fusionne ou compare ces résultats afin de décréter la présence ou non d'une anomalie dans le signal.

**6.** Procédé selon la revendication 1 **caractérisé en ce que** lors de l'étape d'optimisation des groupes, on modifie le nombre Q de groupes en créant/supprimant un ou plusieurs groupes ou sous-classes du modèle.

**7.** Procédé selon la revendication 1 **caractérisé en ce que** lors de l'étape d'optimisation des groupes, on modifie le nombre Q de groupes par fusion/scission d'un ou plusieurs groupes ou sous-classes du modèle.

**8.** Procédé selon la revendication 1 **caractérisé en ce que** l'on met à jour le modèle utilisé lors de l'étape d'utilisation d) en exécutant une des étapes suivantes : l'ajout de données ou signaux audio ou descripteurs acoustiques extraits des signaux audio dans un groupe, la suppression de données dans un groupe, la fusion de deux groupes ou plus, la scission d'un groupe en au moins deux groupes, la création d'un nouveau groupe, la suppression d'un groupe existant, la mise en veille du classifieur associé à un groupe, le réveil du classifieur associé à un groupe

**9.** Procédé selon l'une des revendications précédentes **caractérisé en ce que** l'on utilise lors de l'étape c) un critère de répartition optimale des signaux audio dans les Q différents groupes choisi parmi la liste suivante :

• la fraction des données audio qui changent de groupe après une itération inférieure à une valeur seuil prédéfinie,
• un nombre maximum d'itérations atteint,
• un critère d'information sur les données audio et la modélisation de chaque groupe atteignant une valeur seuil prédéfinie.

**10.** Procédé selon la revendication 1 **caractérisé en ce que** l'on utilise la méthode K_moyennes pour l'étape d'initialisation de groupes.

**11.** Système pour déterminer des évènements anormaux dans un environnement donné, par analyse de signaux audio détectés dans ledit environnement en exécutant le procédé selon l'une des revendications 1 à 10 **caractérisé en ce qu'**il comporte au moins :

• un capteur acoustique (1) de sons, de bruits sonores présents dans une zone à surveiller relié à un dispositif (3) contenant un filtre et un convertisseur analogique-numérique,
• un processeur (5) comprenant un module (6) de prétraitement des données, et un module d'apprentissage (7),
• une base de données (9) comprenant des modèles correspondant à des classes de paramètres acoustiques représentatifs d'un environnement acoustique considéré comme normal
• un ou plusieurs capteurs acoustiques (10) relié chacun à un dispositif (11) comprenant un filtre et un convertisseur analogique numérique
• un processeur (13) comprenant un module de prétraitement (14) puis un module (15) de reconnaissance des données traitées, le module de prétraitement est relié (16) à la base de données, adapté à exécuter les étapes du procédé,
• un moyen (18, 19) de visualisation ou de détection des évènements anormaux.

**Patentansprüche**

1. Verfahren zum Erkennen von anormalen Ereignissen in einer gegebenen Umgebung durch Analysieren von in der Umgebung aufgezeichneten Audiosignalen, wobei das Verfahren einen Schritt des Modellisierens eines normalen Ambiente durch wenigstens ein Modell und einen Schritt des Nutzens des oder der Modelle beinhaltet, wobei das Verfahren wenigstens die folgenden Schritte beinhaltet:

   einen Schritt (2.1) des Aufbauens eines Modells, der wenigstens die folgenden Schritte beinhaltet:

   a) einen Schritt (3.1) des unbeaufsichtigten Initialisierens von Q Gruppen, bestehend aus einer Gruppierung nach Klassen, oder eines Subraums des normalen Ambiente, von Audiodaten, die die Trainingssignale $S_A$ repräsentieren, wobei Q fest und gleich oder größer als 2 ist,
   b) einen Schritt (3.2) des Definierens eines Normalitätsmodells, bestehend aus SVM-Klasse 1 Klassifikatoren, wobei jeder Klassifikator eine Gruppe repräsentiert, wobei jede Gruppe von Trainingsdaten eine Unterklasse definiert, um ein Normalitätsmodell zu erhalten, das aus mehreren SVM-Klasse 1 Klassifikatoren gebildet ist, wobei jeder der Klassifikatoren an eine Gruppe oder einen Teilsatz von als normal bezeichneten Daten angepasst ist, abgeleitet von den das Ambiente repräsentierenden Trainingssignalen,
   c) einen Schritt (3.3) des Optimierens der Gruppen, der das in Schritt (3.2) erhaltene Modell nutzt, um die Daten in den Q unterschiedlichen Gruppen umzuverteilen, wobei die abweichenden Daten, die Werten entsprechen, die nicht zu den Gruppen gehören, zurückgewiesen werden,
   d) Wiederholen der Schritte b und c, bis ein Stoppkriterium $C_1$ verifiziert ist, und Erhalten eines Modells M,

   wobei der Schritt des Nutzens der ein oder mehreren Modelle M aus dem Aufbauschritt wenigstens die folgenden Schritte beinhaltet:

   e) Analysieren (2.4) eines unbekannten Audiosignals $S_T$ von der zu analysierenden Umgebung, wobei das unbekannte Audiosignal mit dem Modell M aus dem Modellaufbauschritt verglichen wird, und Zuordnen einer Bewertung fq für jeden SVM-Klasse 1 Klassifikator, und
   f) Vergleichen des Satzes der durch die SVM-Klasse 1 Klassifikatoren erhaltenen Bewertungsziffern fq mit Hilfe von Entscheidungsregeln, um die An- oder Abwesenheit einer Anomalie in dem analysierten Audiosignal zu bestimmen (2.5).

2. Verfahren nach Anspruch 1, **dadurch gekennzeichnet, dass**, da die Audiodaten mit Segmentierungsinformationen assoziiert sind, das Verfahren einem Satz von Daten, die ein selbes Segment bilden, eine selbe Bewertungsziffer fq zuordnet, wobei ein Segment einem Satz von ähnlichen und konsekutiven Frames des Audiosignals entspricht, wobei die Bewertungsziffer durch Berechnen des Mittelwerts oder des Medianwertes der für jeden der Frames des analysierten Signals erhaltenen Bewertungen berechnet wird.

3. Verfahren nach einem der Ansprüche 1 bis 2, **dadurch gekennzeichnet, dass** SVM-Klasse 1 Klassifikatoren mit binären Beschränkungen benutzt werden.

4. Verfahren nach einem der Ansprüche 1 bis 3, **dadurch gekennzeichnet, dass**, wenn mehrere Modelle Mj bestimmt werden, wobei jedes Modell unter Verwendung unterschiedlicher Stoppkriterien $C_1$ und/oder unterschiedlicher Initialisierungskriterien I erhalten wird, ein einziges Modell durch Nutzen von statistischen oder heuristischen Kriterien behalten wird.

5. Verfahren nach einem der Ansprüche 1 bis 3, **dadurch gekennzeichnet, dass** mehrere Modelle Mj im Modellaufbauschritt bestimmt und behalten werden, für jedes der Modelle Mj das Audiosignal analysiert wird und die An- oder Abwesenheit von Anomalien in dem Audiosignal bestimmt werden, dann die Ergebnisse zusammengefasst oder verglichen werden, um die An- oder Abwesenheit einer Anomalie im Signal festzustellen.

6. Verfahren nach Anspruch 1, **dadurch gekennzeichnet, dass** im Schritt des Optimierens von Gruppen die Anzahl Q von Gruppen modifiziert wird, indem eine oder mehrere Gruppen oder Subklassen des Modells erzeugt/unterdrückt werden.

7. Verfahren nach Anspruch 1, **dadurch gekennzeichnet, dass** im Schritt des Optimierens von Gruppen die Anzahl Q von Gruppen durch Zusammenfassen/Unterteilen von einer oder mehreren Gruppen oder Subklassen des Modells modifiziert wird.

**8.** Verfahren nach Anspruch 1, **dadurch gekennzeichnet, dass** das im Benutzungsschritt d) benutzte Modell aktualisiert wird, indem einer der folgenden Schritte ausgeführt wird: Hinzufügen von Audiodaten oder -signalen oder akustischen Deskriptoren, extrahiert aus Audiosignalen in einer Gruppe, Unterdrücken von Daten in einer Gruppe, Zusammenfassen von zwei oder mehr Gruppen, Unterteilen einer Gruppe in wenigstens zwei Gruppen, Erzeugen einer neuen Gruppe, Unterdrücken einer existierenden Gruppe, Einreihen des mit einer Gruppe assoziierten Klassifikators in eine Warteschlange, Aufwecken des mit einer Gruppe assoziierten Klassifikators.

**9.** Verfahren nach einem der vorherigen Ansprüche, **dadurch gekennzeichnet, dass** in Schritt c) ein optimales Verteilungskriterium für Audiosignale in den Q unterschiedlichen Gruppen benutzt wird, ausgewählt aus der folgenden Liste:

• der Bruchteil von Audiodaten, die die Gruppe nach einer Iteration wechseln, kleiner als ein vordefinierter Schwellenwert,
• eine maximale Anzahl von erreichten Iterationen,
• ein Informationskriterium in Bezug auf die Audiodaten und die Modellisierung jeder Gruppe, die einen vordefinierten Schwellenwert erreicht.

**10.** Verfahren nach Anspruch 1, **dadurch gekennzeichnet, dass** die Methode K_Mittel für den Gruppeninitialisierungsschritt benutzt wird.

**11.** System zum Bestimmen von anormalen Ereignissen in einer gegebenen Umgebung durch Analysieren von in der Umgebung erkannten Audiosignalen durch Ausführen des Verfahrens nach einem der Ansprüche 1 bis 10, **dadurch gekennzeichnet, dass** es wenigstens Folgendes beinhaltet:

• einen akustischen Sensor (1) für Töne, in einer zu überwachenden Zone vorhandene Geräusche, verbunden mit einem Gerät (3), das ein Filter und einen Analog-Digital-Wandler enthält,
• einen Prozessor (5), der ein Modul (6) zum Vorverarbeiten von Daten und ein Trainingsmodul (7) umfasst,
• eine Datenbank (9), die Modelle umfasst, die akustischen Parameterklassen entsprechen, die eine als normal angesehene akustische Umgebung repräsentieren,
• einen oder mehrere akustische Sensoren (10), die jeweils mit einem Gerät (11) verbunden sind, das ein Filter und einen Analog-Digital-Wandler umfasst,
• einen Prozessor (13), der ein Vorverarbeitungsmodul (14) umfasst, dann ein Modul (15) zum Erkennen von verarbeiteten Daten, wobei das Vorverarbeitungsmodul mit der Datenbank verbunden (16) ist, ausgelegt zum Ausführen der Schritte des Verfahrens,
• ein Mittel (18, 19) zum Anzeigen oder Erkennen von anormalen Ereignissen.

## Claims

**1.** Method for detecting abnormal events in a given environment, by analyzing audio signals recorded in said environment, the method comprising a step of modelling a normal ambiance by at least one model and a step of using the model or models, the method comprising at least the following steps:

a model construction step (2.1) comprising at least the following steps:

a) a step (3.1) of unsupervised initialization of Q groups consisting of a grouping by classes, or subspace of the normal ambiance, of the audio data representing the learning signals $S_A$, Q being set and greater than or equal to 2,
b) a step (3.2) of definition of a model of normality consisting of 1-class SVM classifiers, each classifier representing a group, each group of learning data defines a sub-class in order to obtain a model of normality consisting of several classifiers of 1-class SVM, each one being adapted to a group, or sub-set of data said to be normal derived from the learning signals representative of the ambiance,
c) a step (3.3) of optimisation of the groups that uses the model obtained in step (3.2) so as to redistribute the data in the Q different groups, the aberrant data corresponding to values not belonging to the groups are rejected,
d) repetition of the steps b and c until a stop criterion $C_1$, is checked and a model M is obtained,

the step of use of the model(s) M obtained from the construction step comprising at least the following steps:

e) the analysis (2.4) of an unknown audio signal $S_T$ obtained from the environment to be analyzed, the unknown audio signal is compared to the model M obtained from the model construction step, and assigns, for each 1-class SVM classifier, a score fq, and

f) a comparison of all the scores fq obtained by the 1-class SVM classifiers using decision rules in order to determine (2.5) the presence or absence of an anomaly in the audio signal analyzed.

2. Method according to Claim 1 **characterized in that** the audio data being associated with segmentation information, the method assigns a same score value fq to a set of data constituting one and the same segment, a segment corresponding to a set of similar and consecutive frames of the audio signal, said score value being obtained by calculating the average value or the median value of the scores obtained for each of the frames of the signal analyzed.

3. Method according to one of claims 1 to 2, **characterized in that** 1-class SVM classifiers are used with binary constraints.

4. Method according to one of claims 1 to 3, **characterized in that**, when a plurality of models Mj are determined, each model being obtained by using different stop criteria $C_1$ and/or different initializations I, a single model is retained by using statistical or heuristic criteria.

5. Method according to one of claims 1 to 3, **characterized in that** a plurality of models Mj are determined and retained during the model construction step, for each of the models Mj, the audio signal is analyzed and the presence or absence of anomalies in the audio signal is determined, then these results are merged or compared in order to decide categorically as to the presence or absence of an anomaly in the signal.

6. Method according to claim 1, **characterized in that**, during the group optimization step, the number Q of groups is modified by creating/deleting one or more groups or subclasses of the model.

7. Method according to claim 1, **characterized in that**, during the group optimization step, the number Q of groups is modified by merging/splitting one or more groups or subclasses of the model.

8. Method according to claim 1, **characterized in that** the model used during the usage step d) is updated by executing one of the following steps: the addition of audio data or signals or acoustic descriptors extracted from the audio signals in a group, the deletion of data in a group, the merging of two or more groups, the splitting of a group into at least two groups, the creation of a new group, the deletion of an existing group, the placing on standby of the classifier associated with a group, the reactivation of the classifier associated with a group.

9. Method according to one of the preceding claims, **characterized in that** during the step c), a criterion is used for the optimum distribution of the audio signals in the Q different groups chosen from the following list:

   • the fraction of the audio data which changes group after an iteration below a predefined threshold value,
   • a maximum number of iterations reached,
   • a criterion of information on the audio data and the modelling of each group reaching a predefined threshold value.

10. Method according to claim 1, **characterized in that** the K_averages method is used for the group initialization step.

11. System for determining abnormal events in a given environment, by the analysis of audio signals detected in said environment by executing the method as claimed in one of claims 1 to 10, **characterized in that** it comprises at least:

   • an acoustic sensor (1) for detecting sounds, sound noises present in an area to be monitored linked to a device (3) containing a filter and an analogue-digital converter,
   • a processor (5) comprising a module (6) for preprocessing the data, and a learning module (7),
   • a database (9), comprising models corresponding to classes of acoustic parameters representative of an acoustic environment considered to be normal,
   • one or more acoustic sensors (10) each linked to a device (11) comprising a filter and an analogue-digital converter,
   • a processor (13) comprising a preprocessing module (14) then a module (15) for recognizing the processed data, the preprocessing module is linked (16) to the database, adapted to execute the steps of the method,
   • a means (18, 19) for displaying or detecting the abnormal events.

EP 2 696 344 B1

FIG.1

FIG.2

FIG.3

E$_l$ ensemble
initialisation

Ec ensemble de
critères d'arrêts

4.1

4.2

non    C$_2$

oui

4.3

M

FIG.4

Signaux

5.2

Evaluation
groupe 1

5.1

5.3

Evaluation
groupe 2

...    ...

5.4

FIG.5

Evaluation
groupe Q

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2422301 A

**Littérature non-brevet citée dans la description**

- **LECOMTE et al.** Abnormal Events Détection Using Unsupervised One-Class SVM-Application to Audio Surveillance and Evaluation. *IEEE In Advanced Video and Signal based Surveillance,* 2011

- efficient support vector data descriptions for novelty détection. **XINJUN PENG et al.** Neural Computing And applications. Springer-Verlag, 18 Mai 2011, vol. 21, 2023-2032